# EUROPEAN PATENT APPLICATION

(11) **EP 4 811 085 A1**
(43) Date of publication of application: **23.09.2026**
(21) Application number: 24920599.8
(22) Date of filing: 20.12.2024
(51) Int. Cl.: G06F 3/041, G06N 3/044, G06F 3/044

(54) **ELECTRONIC DEVICE FOR IDENTIFYING ABNORMAL TOUCH AND CONTROL METHOD THEREOF**

(30) Priority: 22.01.2024 KR 20240009651
(71) Applicant: Samsung Electronics Co., Ltd., Suwon-si, Gyeonggi-do 16677 (KR)
(72) Inventor: JOO, Donggyu, Suwon-si Gyeonggi-do 16677 (KR); HWANG, Jinyoung, Suwon-si Gyeonggi-do 16677 (KR)
(74) Representative: Gulde & Partner
(86) International application number: PCT/KR2024/020895
(87) International publication number: WO 2025/159350

(57) **Abstract**

An electronic apparatus is disclosed. The electronic apparatus includes memory storing a first artificial intelligence model configured to output touch information based on touch data input in a current period and a second artificial intelligence model configured to output touch information based on the touch data input in the current period and previous state information; a touch panel, and one or more processors, and the one or more processors are configured to input touch data obtained through the touch panel to the first artificial intelligence model and the second artificial intelligence model, and based on the touch information output from the first artificial intelligence model and the second artificial intelligence model being different, perform an operation corresponding to the touch information output from the first artificial intelligence model.

## Description

### [Technical Field]

The present invention relates to an electronic apparatus and a control method thereof, and more particularly, to an electronic apparatus capable of identifying an abnormal touch and a control method thereof.

### [Background Art]

Recently, electronic apparatuses that receive a user's touch through a touch panel and perform a corresponding operation have become widely used. However, problems have occurred in which a touch not intended by the user is input to the touch panel, resulting in unintended actions such as a phone call being connected to another person or an application being executed.

Prior art technology has identified whether a touch input through a touch panel is a normal touch by using various types of sensors such as a proximity sensor and an illuminance sensor. For example, when sensors detect that the electronic apparatus has continuously been positioned close to an external object and located in a dark environment, it may be determined that the electronic apparatus is inside a pocket, and a touch input to the touch panel may be determined to be an abnormal touch occurring inside the pocket.

However, determining whether a touch is a normal touch by relying only on sensing values of sensors has low accuracy, and as various types of sensors occupy a large physical space, the space for memory or a processor has become limited, and as expensive sensors are required, a problem has arisen in that the manufacturing cost of the electronic apparatus increases. Therefore, in order to reduce the physical space occupied by sensors and the manufacturing cost, a need has arisen for a technology capable of accurately determining whether a touch is normal using only a small number of low-cost sensors.

### [Disclosure of Invention]

### [Technical Problem]

An electronic apparatus according to at least one embodiment includes memory storing a first artificial intelligence model configured to output touch information based on touch data input in a current period and a second artificial intelligence model configured to output touch information based on the touch data input in the current period and previous state information, a touch panel, and one or more processors, and the one or more processors may be configured to input touch data obtained through the touch panel to the first artificial intelligence model and the second artificial intelligence model, and based on the touch information output from the first artificial intelligence model and the second artificial intelligence model being different, perform an operation corresponding to the touch information output from the first artificial intelligence model.

A method of controlling an electronic apparatus according to at least one embodiment may include inputting obtained touch data to a first artificial intelligence model and a second artificial intelligence model, and based on touch information output from the first artificial intelligence model and the second artificial intelligence model being different, performing an operation corresponding to the touch information output from the first artificial intelligence model.

In a non-transitory computer-readable recording medium including a program that executes a method of controlling an electronic apparatus according to at least one embodiment, the control method may include inputting obtained touch data to a first artificial intelligence model and a second artificial intelligence model, and based on touch information output from the first artificial intelligence model and the second artificial intelligence model being different, performing an operation corresponding to the touch information output from the first artificial intelligence model.

### [Brief Description of Drawings]

FIG. 1 is a view provided to explain an operation of an electronic apparatus according to one or more embodiments;
FIG. 2 is a block diagram provided to explain configuration of an electronic apparatus according to one or more embodiments;
FIG. 3 is a view provided to explain a method of identifying whether a touch is normal by a first artificial intelligence model according to one or more embodiments;
FIG. 4 is a view provided to explain a method of identifying whether a touch is normal by a second artificial intelligence model according to one or more embodiments;
FIG. 5 is a view provided to explain a method of determining whether to initialize a state of a second artificial intelligence model of an electronic apparatus according to one or more embodiments;
FIG. 6 is a view provided to explain a method of calculating a reset score for state initialization of a second artificial intelligence model of an electronic apparatus according to one or more embodiments;
FIG. 7 is a view provided to explain a method of initializing a state of a second artificial intelligence model according to one or more embodiments;
FIG. 8 is a view provided to explain a method of inputting data to a first artificial intelligence model and a second artificial intelligence model according to one or more embodiments;
FIG. 9 is a flowchart provided to explain a method of controlling an electronic apparatus according to one or more embodiments; and
FIG. 10 is a flowchart provided to explain a method of controlling an electronic apparatus according to one or more embodiments.

### [Mode for Invention]

The present disclosure may be variously modified and have several embodiments, and specific embodiments of the present disclosure are thus illustrated in the accompanying drawings and described in detail in the specification. However, it should be understood that the scope of the present disclosure is not limited to specific embodiments, and includes all modifications, equivalents, and alternatives according to an embodiment of the present disclosure. Throughout the accompanying drawings, similar components may be denoted by similar reference numerals.

In describing the present disclosure, omitted is a detailed description of a case where it is decided that a detailed description of the known functions or configurations related to the present disclosure may unnecessarily obscure the gist of the present disclosure.

In addition, the following embodiment may be modified in several different forms, and the scope and spirit of the present disclosure are not limited to the following embodiments. Rather, these embodiments make the present disclosure thorough and complete, and are provided to completely convey the spirit of the present disclosure to those skilled in the art.

Terms used in the present disclosure are used only to describe the specific embodiments rather than limit the scope of the present disclosure. A term of a singular number may include its plural number unless explicitly indicated otherwise in the context.

In the present disclosure, the expression such as "have", "may have", "include", or "may include", indicates the presence of a corresponding feature (e.g., a numerical value, a function, an operation, or a component such as a part), and does not exclude the presence of an additional feature.

In the present disclosure, the expression such as "A or B", "at least one of A and/or B", or "one or more of A and/or B" may include all possible combinations of items enumerated together. For example, "A or B", "at least one of A and B", or "at least one of A or B" may indicate all of 1) a case in which at least one A is included, 2) a case in which at least one B is included, or 3) a case in which both of at least one A and at least one B are included.

The expressions such as "first" and "second", used in the present disclosure, may indicate various components regardless of the sequence and/or importance of the components, and these expressions are only used to distinguish one component and another component from each other, and do not limit the corresponding components.

When any component (e.g., a first component) is mentioned to be "(operatively or communicatively) coupled with/to" or "connected to" another component (e.g., a second component), it should be understood that any component is directly coupled to another component or may be coupled to another component through yet another component (e.g., a third component).

On the other hand, when any component (e.g., the first component) is mentioned to be "directly coupled with/to" or "directly connected to" another component (e.g., the second component), it should be understood that yet another component (e.g., the third component) is not present between any component and another component.

An expression such as "configured (or set) to", used in the present disclosure, may be replaced by an expression such as "suitable for", "having the capacity to", "designed to", "adapted to", "made to", or "capable of", depending on a context. The expression "configured (or set) to" does not necessarily indicate "specifically designed to" in terms of hardware.

Instead, the expression "a device configured to", in any context, may indicate that the device may "perform~" together with another device or component. For example, a "processor configured (or set) to perform A, B, and C" may indicate a dedicated processor (e.g., an embedded processor) that may perform the corresponding operations or a generic-purpose processor (e.g., a central processing unit (CPU) or an application processor) that may perform the corresponding operations by executing one or more software programs stored in a memory device.

In the embodiments, a "module" or a "part" may perform at least one function or operation, and be implemented by hardware or software or be implemented by a combination of hardware and software. In addition, a plurality of "modules" or a plurality of "parts" may be integrated in at least one module and be implemented by at least one processor except for a "module" or a "part" that needs to be implemented by specific hardware.

Meanwhile, various elements and regions in the drawings are schematically illustrated. Therefore, the spirit of the present disclosure is not limited by relative sizes or intervals illustrated in the accompanying drawings.

Hereinafter, an embodiment of the present disclosure is described in detail with reference to the accompanying drawings so that those skilled in the art to which the present disclosure pertains may easily practice the present disclosure.

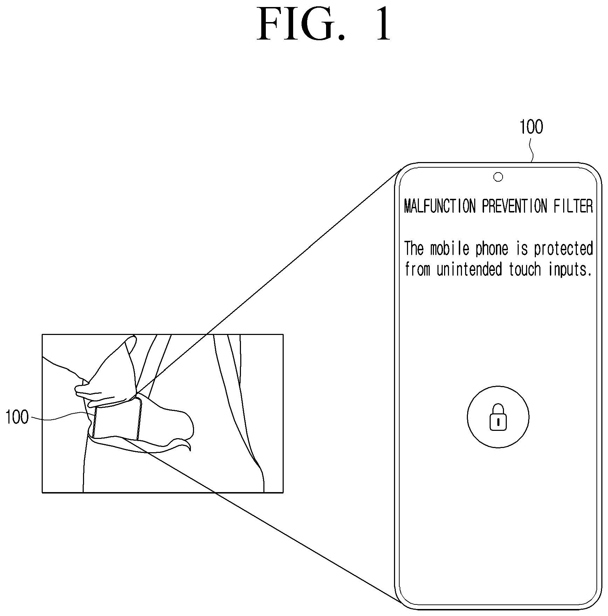

FIG. 1 is a view provided to explain an operation of an electronic apparatus according to one or more embodiments.

According to FIG. 1, when a touch input through a touch panel is an abnormal touch, an electronic apparatus 100 may prevent an operation of the electronic apparatus 100 based on the abnormal touch by performing no operation or by receiving confirmation from a user.

The electronic apparatus 100 may include a touch panel capable of receiving a user's touch, and may be a device that performs an operation corresponding to a touch input through the touch panel. In FIG. 1, the electronic apparatus 100 is illustrated as a mobile phone, but this is merely one example, and may be implemented as various types of electronic devices capable of receiving touch input, such as an electronic frame, Digital Information Display (DID), kiosk, Portable Media Player (PMP), MP3 player, game console, Large Format Display (LFD), laptop, television (TV), tablet personal computer (tablet PC), monitor, projector system, and the like. However, the present disclosure is not limited thereto, and other home appliances, medical devices, and the like may also be included in the electronic apparatus 100. The touch panel refers to a configuration capable of detecting a touch, and may be implemented as a touch screen capable of displaying images, or may be implemented in various forms such as a touch pad or a touch button.

According to an embodiment, the electronic apparatus 100 may identify whether a touch input through the touch panel corresponds to an abnormal touch or corresponds to a normal touch based on an output value of an artificial intelligence model. Unlike conventional technology that identified whether a touch is normal through various types of sensors, the electronic apparatus 100 of the present disclosure identifies whether a touch is normal based on an output value of the artificial intelligence model, thereby securing physical space occupied by various types of sensors within the electronic apparatus 100, and reducing manufacturing costs because expensive sensors are not required. In addition, the electronic apparatus 100 may more accurately identify whether a touch is normal by using a plurality of artificial intelligence models, and a specific method of identifying whether a touch is normal will be described in detail with reference to the accompanying drawings below.

Here, "normal touch" may mean that a user inputs a touch to the touch panel by using a touch object such as a finger, touch pen, stylus pen, pointer, and the like. For example, "normal touch" may include that a user contacts a fingerprint of a finger to the touch panel in order to release a lock of the electronic apparatus 100. "Normal touch" may be replaced with other terms such as finger touch, pen touch, pointer touch, intentional touch, non-accidental touch, and the like, but in the present specification, the term "normal touch" will be collectively used.

Here, "abnormal touch" may mean a touch that is not intended by a user. For example, as illustrated in FIG. 1, "abnormal touch" may include that, when a user places the electronic apparatus 100 in a pocket, a touch is input to the touch panel of the electronic apparatus 100 by an object inside the pocket, or the like.

Alternatively, when a user places the electronic apparatus 100 in a bag and moves, or carries the electronic apparatus 100 in a hand, even in a state in which the user does not intend to operate the electronic apparatus 100, a finger, a touch pen, or other external objects may contact the touch panel. Alternatively, in a case in which the electronic apparatus 100 includes a large screen such as a television (TV), animals such as a dog, a cat, or a bird may touch a screen of the television (TV), or an object thrown by a user may touch the screen. Most of these touches occur unintentionally by a user. In the present disclosure, these situations are referred to as abnormal touch.

"Abnormal touch" may be replaced with other terms such as in-pocket touch, object touch, non-intentional touch, accidental touch, and the like, but in the present specification, the term "abnormal touch" will be collectively used.

In FIG. 1, it is illustrated that the electronic apparatus 100 executes a malfunction prevention filter based on that abnormal touch is identified and controls the electronic apparatus 100 so as not to operate due to the abnormal touch. According to FIG. 1, a user may recognize that a touch has occurred by viewing a screen of the electronic apparatus 100. When the touch is a touch intended by the user, that is, a normal touch, the user may touch an object displayed on the screen and drag in an upward arrow direction. In this case, the electronic apparatus 100 may release a lock state and display a standby screen. On the other hand, when the touch is not intended by the user, the user may perform no operation or may press a button for switching to a sleep state again. When there is no operation for a predetermined time, the electronic apparatus 100 may switch to the sleep state and deactivate the screen.

Although FIG. 1 illustrates a case in which a malfunction prevention filter is provided, the present disclosure is not limited thereto, and the electronic apparatus 100 may display a user interface (UI) screen indicating that an abnormal touch is being input. Alternatively, the electronic apparatus 100 may generate vibration to allow a user to recognize that a touch has occurred, or may ignore the touch and not turn on power, or may perform no other operation.

Meanwhile, when it is determined that a touch is a normal touch, the electronic apparatus 100 may perform an operation corresponding to touch information. For example, in a state in which a plurality of application icons are displayed on a touch screen, when one point of the touch screen is normally touched, the electronic apparatus 100 may identify touch coordinates, and execute an application corresponding to an icon displayed at the touch coordinates.

The electronic apparatus 100 may sense situations before and after a touch and determine whether the touch is a normal touch or an abnormal touch based thereon. A specific determination method will be described in detail below.

Hereinafter, operations of the electronic apparatus 100 according to various embodiments of the present disclosure will be described.

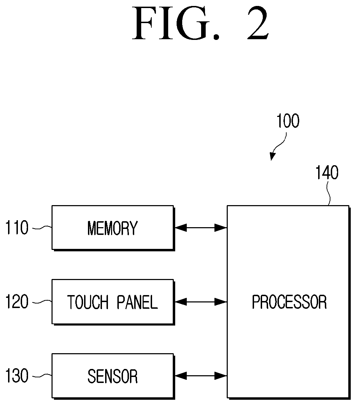

FIG. 2 is a block diagram provided to explain configuration of an electronic apparatus according to one or more embodiments.

According to FIG. 2, the electronic apparatus 100 may include memory 110, a touch panel 120, a sensor 130, and a processor 140. As described above, the electronic apparatus 100 may be implemented in various forms; however, since abnormal touch is more likely to occur in a small-sized electronic apparatus that a user can carry in a bag or pocket, the following description will be made based on a case in which the electronic apparatus 100 is implemented in a form of a mobile phone as illustrated in FIG. 1.

The memory 110 may store various programs, data, instructions, and the like used in the electronic apparatus 100. In addition, the memory 110 may store a first artificial intelligence model and a second artificial intelligence model. In addition, the memory 110 may store various types of information according to various embodiments of the present disclosure.

Here, the "first artificial intelligence model" may be an artificial intelligence model trained to receive touch data obtained through the touch panel and output information on whether the touch data corresponds to a normal touch. The first artificial intelligence model may receive touch data at each predetermined period, may generate current state information based on touch data input in a current period, and may output information on whether the touch data input in the current period corresponds to a normal touch based on the current state information.

Here, the "second artificial intelligence model" may, unlike the first artificial intelligence model, output information on whether touch data corresponds to a normal touch based on previous state information and touch data input in the current period. Therefore, since the second artificial intelligence model may output information based on the previous state information, the second artificial intelligence model may output information reflecting not only the touch data input in the current period but also features of touch data input in previous periods. Accordingly, the second artificial intelligence model may be an artificial intelligence model suitable for outputting information regarding continuous touch data.

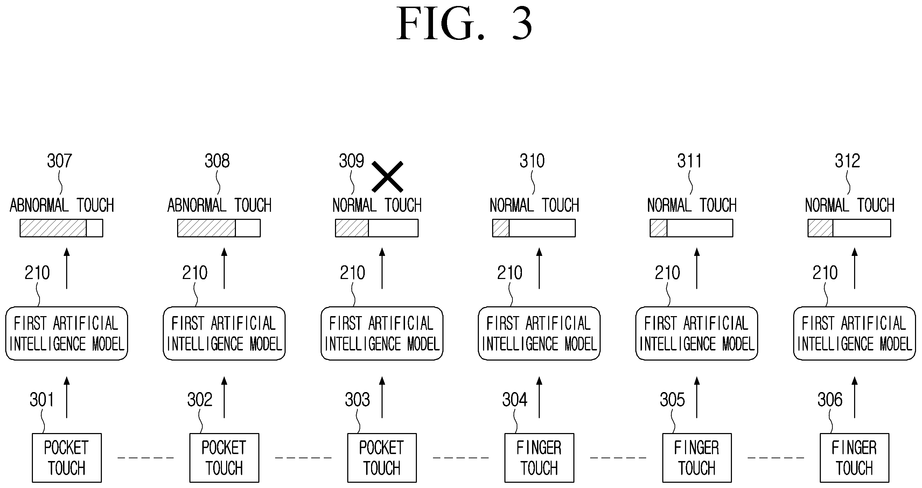

The first artificial intelligence model and the second artificial intelligence model will be described later in detail with reference to the descriptions of FIGS. 3 to 8.

The memory 110 according to an embodiment may be implemented as an internal memory included in one or more processors 140, such as Read Only Memory (ROM) (for example, Electrically Erasable Programmable Read-Only Memory (EEPROM)), Random Access Memory (RAM), or the like, or may be implemented as a memory separate from the one or more processors 140. In this case, the memory 110 may be implemented in a form of memory embedded in the electronic apparatus 100 according to a purpose of data storage, or may be implemented in a form of memory detachable from the electronic apparatus 100. For example, data for driving the electronic apparatus 100 may be stored in memory embedded in the electronic apparatus 100, and data for extended functions of the electronic apparatus 100 may be stored in memory detachable from the electronic apparatus 100.

Meanwhile, in a case of memory embedded in the electronic apparatus 100, the memory may be implemented as at least one of volatile memory (for example, Dynamic Random Access Memory (DRAM), Static Random Access Memory (SRAM), or Synchronous Dynamic Random Access Memory (SDRAM)), non-volatile memory (for example, One Time Programmable Read Only Memory (OTPROM), Programmable Read Only Memory (PROM), Erasable Programmable Read Only Memory (EPROM), Electrically Erasable Programmable Read Only Memory (EEPROM), mask ROM, flash ROM, flash memory (for example, NAND flash or NOR flash), hard drive, or Solid State Drive (SSD)), and in a case of memory detachable from the electronic apparatus 100, the memory may be implemented in a form such as a memory card (for example, Compact Flash (CF), Secure Digital (SD), Micro Secure Digital (Micro-SD), Mini Secure Digital (Mini-SD), Extreme Digital (xD), Multi Media Card (MMC)), or an external memory connectable to a Universal Serial Bus (USB) port (for example, USB memory), and the like.

The touch panel 120 is configured to sense a touch and output touch data. As described above, the touch panel 120 may be implemented in various forms such as a touch screen or a touch button. In the present disclosure, touch may include not only a case in which a conductive object directly contacts the touch panel 120 of the electronic apparatus 100, but also a case in which a conductive object approaches a screen of the electronic apparatus 100. For example, the conductive object may include a user's body (for example, a finger, palm, face, ear, thigh, buttocks), a touch pen, a stylus pen, and the like. Alternatively, the conductive object may be gloves attached with a conductive pad that connects a user's hand and the outside. The touch panel 120 may be embedded in a display panel of the electronic apparatus 100, or may be provided separately from the display panel. For example, when implemented as the electronic apparatus 100 in which the touch panel 120 is separately provided around the display panel, a user may perform an operation such as moving a cursor displayed on the display panel by dragging while touching one point on the touch panel 120.

The touch panel 120 may include a plurality of sensing electrodes arranged in rows and columns. Touch data generated by a touch may be output through the plurality of sensing electrodes. For example, the plurality of sensing electrodes may output the touch data according to a capacitance sensing method.

According to an embodiment, the touch panel 120 may be implemented in a structure in which capacitance is formed between each of the plurality of sensing electrodes and ground, and such structure may be referred to as a self-capacitance structure. In this case, the touch panel 120 may detect a change amount of capacitance of each of the plurality of sensing electrodes and output touch data of a self-capacitance method.

According to another embodiment, the touch panel 120 may be implemented in a structure in which capacitance is formed between the plurality of sensing electrodes, and such structure may be referred to as a mutual capacitance structure. The touch panel 120 implemented in the mutual capacitance structure may include a sensing electrode layer arranged in a horizontal axis and a sensing electrode layer arranged in a vertical axis, and capacitance between electrode layers may be formed at intersections of the horizontal axis and the vertical axis. In this case, the touch panel 120 may detect a change amount of capacitance formed at the intersections and output touch data of a mutual capacitance method.

In the above description, it has been described that the touch panel 120 may be implemented in the self-capacitance structure and the mutual capacitance structure to respectively output touch data of the self-capacitance method and touch data of the mutual capacitance method, but the touch panel 120 may output touch data of the self-capacitance method and touch data of the mutual capacitance method simultaneously.

In addition, in the above description, it has been described only that the touch panel 120 may output touch data according to the capacitance sensing method, but this is merely one example, and touch may be sensed and touch data may be output according to various sensing methods such as resistive sensing method, optical sensing method, pressure sensing method, and the like. However, in the present description, for convenience of description, only the touch panel 120 using the capacitance sensing method will be described.

The sensor 130 is configured to detect a change in a state of the electronic apparatus 100.

According to an embodiment, the sensor 130 may include an illuminance sensor. The illuminance sensor may convert light incident on the electronic apparatus 100 into an electrical signal and output an electrical signal indicating a density of the incident light. The processor 140 may identify whether the electronic apparatus 100 is located in a bright place or in a dark place based on the electrical signal output from the illuminance sensor.

According to another embodiment, the sensor 130 may include a motion detection sensor such as a gyro sensor, an acceleration sensor, or a geomagnetic sensor. Here, the motion detection sensor may include various sensors that detect movement, rotation, inclination, acceleration, and the like of the electronic apparatus 100. The motion detection sensor may detect a motion such as movement or rotation of the electronic apparatus 100 and may output an electrical signal corresponding to the detected motion. The processor 140 may identify how much the electronic apparatus 100 has moved, in which direction and how much the electronic apparatus 100 has rotated, and the like based on the electrical signal output by the motion detection sensor. For example, the processor 140 may identify changes in a pitch angle, a roll angle, and a yaw angle.

In the above description, only that the sensor 130 may include an illuminance sensor or a motion detection sensor has been exemplified; however, this is merely an example, and the sensor 130 may include various sensors such as a proximity sensor, an ultrasonic sensor, and an infrared sensor, through which a change in a state of the electronic apparatus 100 may be detected. For example, when the sensor 130 includes a proximity sensor, the processor 140 may identify that the electronic apparatus 100 is continuously close to an external object through a sensing value of the proximity sensor.

One or more processors 140 control overall operations of the electronic apparatus 100. Specifically, the one or more processors 140 may be connected to respective components of the electronic apparatus 100 and may control overall operations of the electronic apparatus 100. For example, the one or more processors 140 may be operatively connected to the memory 110, the touch panel 120, and the sensor 130. The processor 140 may be configured as one processor or a plurality of processors.

The one or more processors 140 may perform operations of the electronic apparatus 100 according to various embodiments by executing at least one instruction stored in the memory 110.

The one or more processors 140 may include at least one of a Central Processing Unit (CPU), a Graphics Processing Unit (GPU), an Accelerated Processing Unit (APU), a Many Integrated Core (MIC), a Digital Signal Processor (DSP), a Neural Processing Unit (NPU), a hardware accelerator, or a machine learning accelerator. The one or more processors 140 may control one or any combination of other components of the electronic apparatus 100, and may perform operations related to communication or data processing. The one or more processors 140 may execute one or more programs or instructions stored in the memory. For example, the one or more processors 140 may perform a method according to one or more embodiments of the present disclosure by executing one or more instructions stored in the memory.

The one or more processors 140 may be implemented as an artificial intelligence(AI)-dedicated processor. For example, the one or more processors 140 may be designed as a hardware chip such as an Application Specific Integrated Circuit (ASIC) or a Field Programmable Gate Array (FPGA) specialized for processing a specific artificial intelligence model. When at least one artificial intelligence model is stored in the memory 110 as described above, the processor 140 may execute the artificial intelligence model to perform various operations.

Specifically, the processor 140 may input touch data obtained through the touch panel 120 to the first artificial intelligence model and the second artificial intelligence model. The first artificial intelligence model and the second artificial intelligence model may output touch information according to execution of the processor 140.

Here, the touch data obtained through the touch panel 120 may be in a form of a two-dimensional array. Specifically, the touch panel 120 may be divided into a plurality of cells in a horizontal direction and a vertical direction, and the touch data may be data in a two-dimensional array form recording a change amount of capacitance generated in each of the plurality of cells by touch input. For example, due to touch input to the touch panel 120, a change amount of capacitance of 100 pico-Farad (pF) may be detected in a cell located at a tenth position from the right and a fifth position from the bottom, and in this case, touch data in a two-dimensional array form may be stored as array[10][5] = 100 (pF). In this case, as an intensity of touch input to the touch panel 120 increases, the change amount of capacitance may increase. Therefore, the touch data in the two-dimensional array form may include information on coordinates at which touch is input and information on intensity of the touch.

Here, the touch information may include information indicating whether touch input through the touch panel 120 is a normal touch or an abnormal touch. According to an embodiment, the first artificial intelligence model and the second artificial intelligence model may output a probability that touch data input to the model corresponds to a normal touch and a probability that the touch data corresponds to an abnormal touch. When a probability of being a normal touch is greater, the processor 140 may identify the input touch data as a normal touch. On the other hand, when a probability of being an abnormal touch is greater, the processor 140 may identify the input touch data as an abnormal touch.

In the above description, only that the touch data obtained through the touch panel 120 is in a two-dimensional array form has been exemplified; however, this is merely an example, and the touch data may of course be implemented in a three-dimensional array form or a multi-dimensional array form.

In the above description, only that the touch information may mean information indicating whether a touch is a normal touch or an abnormal touch has been exemplified; however, this is merely one example, and the touch information may include information on a specific body part that caused the touch input, such as whether the touch is caused by a face or by a thigh, and may include various and specific information according to a training method of the artificial intelligence model.

The touch information output from the first artificial intelligence model and the second artificial intelligence model may be the same in most cases. However, when there is a sudden change in circumstances, such as when a user takes the electronic apparatus 100 out of a pocket after placing it in the pocket, or suddenly places it in the pocket, one of the two models may output incorrect touch information.

According to an embodiment, when the touch information output from the first artificial intelligence model and the second artificial intelligence model is different, the processor 140 may perform an operation corresponding to the touch information output from the first artificial intelligence model.

According to another embodiment, when the touch information output from the first artificial intelligence model and the second artificial intelligence model is different, the processor 140 may identify a change amount of a sensing value of the sensor 130 during a predetermined unit time prior to touch on the touch panel 120.

Since the first artificial intelligence model outputs touch information based on touch data input in a current period, whereas the second artificial intelligence model outputs touch information based on touch data input in the current period and previous state information, the touch information output from the two artificial intelligence models may be different.

Here, the "period" may mean a period in which the first artificial intelligence model and the second artificial intelligence model output touch information or a period in which touch data is input to the first artificial intelligence model and the second artificial intelligence model. For example, when the processor 140 obtains touch data corresponding to user touch input to the touch panel 120 at a frequency of 120 hertz (Hz), touch data may be input to the first artificial intelligence model and the second artificial intelligence model at a period of $\frac{1}{120} sec$. In this case, the first artificial intelligence model and the second artificial intelligence model may output touch information at a period of $\frac{1}{120} sec$. The "period" may be replaced with terms such as stage, time step, state, and the like, but in the present description, the term "period" will be collectively used.

In addition, "state information" may mean information generated by the first artificial intelligence model and the second artificial intelligence model in order to output touch information, and the "state information" may include features of touch data input in the current period (for example, an area where touch is input, an intensity of touch) and features of touch data input in a previous period. In this case, the first artificial intelligence model may generate current state information based on features extracted from touch data input in the current period, and the second artificial intelligence model may generate current state information based on features extracted from touch data input in the current period and the previous state information.

According to an embodiment, when $\frac{1}{120} sec$ is set as a period, the previous state information may mean state information generated by the second artificial intelligence model based on features extracted from touch data obtained before $\frac{1}{120} sec$ in the current period. In this case, the previous state information may include features extracted from touch data obtained before $\frac{1}{120} sec$. Since the second artificial intelligence model generates current state information based on the previous state information and touch data input in the current period and outputs touch information based on the current state information, the second artificial intelligence model may output touch information by reflecting features of touch data input in previous periods, and thus may be suitable for outputting touch information for touch data that is continuously input.

According to an embodiment, as illustrated in FIG. 1, when the electronic apparatus 100 is located inside a pocket, continuous abnormal touches may be input to the touch panel 120. In such a state, when a user intends to use the electronic apparatus 100, the user may take the electronic apparatus 100 out of the pocket and touch the touch panel 120 with a finger. In this manner, after suddenly moving from inside the pocket to outside, even when a normal touch by the user's finger is input to the touch panel 120, the second artificial intelligence model may identify the touch as an abnormal touch. This is because the second artificial intelligence model outputs touch information based not only on touch data input in the current period but also on previous state information, and the previous state information includes features of abnormal touches input to the touch panel 120 when the electronic apparatus 100 is located inside the pocket.

As in the situation described above, when abnormal touch is continuously input to the touch panel 120 in a previous period and normal touch is input to the touch panel 120 in the current period, the first artificial intelligence model may output touch information indicating that the touch corresponds to a normal touch, but the second artificial intelligence model may output different touch information indicating that the touch corresponds to an abnormal touch.

In this case, the processor 140 may identify whether a change amount of a sensing value of the sensor 130 during a predetermined unit time prior to touch on the touch panel 120 in the current period exceeds a threshold value.

According to an embodiment, when the sensor 130 includes an illuminance sensor, the processor 140 may identify whether a sensing value of the illuminance sensor has increased by more than a threshold value during the predetermined unit time prior to touch on the touch panel 120 in the current period. Specifically, when a sensing value of the illuminance sensor changes from 0.01 lux to 10 lux within 3 seconds, the processor 140 may identify that the sensing value has changed by more than the threshold value, and may identify that the electronic apparatus 100 has moved from inside the pocket to outside.

According to another embodiment, the sensor 130 may include a motion detection sensor, and the processor 140 may identify whether a change amount of a sensing value of the motion detection sensor exceeds a threshold value. Specifically, when a change amount of rotational motion detected by the motion detection sensor and a change amount of linear motion exceed a threshold value, the processor 140 may identify that the electronic apparatus 100 has moved from inside the pocket to outside or from outside the pocket to inside.

In the above description, the "predetermined unit time" has been exemplified as 3 seconds, but this is merely one example, and the "predetermined unit time" may be set as 1 second, 2 seconds, or any arbitrary time, and may be set based on various criteria such as an average time required to move the electronic apparatus 100 from inside a pocket to outside, or an average time required to move the electronic apparatus 100 from inside a bag to outside.

When the change amount of the sensing value exceeds the threshold value, the processor 140 may perform an operation corresponding to touch information output from the first artificial intelligence model, and when the change amount of the sensing value is less than or equal to the threshold value, the processor 140 may perform an operation corresponding to touch information output from the second artificial intelligence model.

According to an embodiment, when touch information output from the first artificial intelligence model or the second artificial intelligence model corresponds to a normal touch, the processor 140 may perform an operation corresponding to the normal touch. For example, the processor 140 may perform various operations based on coordinates at which normal touch is detected on the touch panel 120, such as turning on power of the electronic apparatus 100, releasing a lock, executing or terminating an application.

According to another embodiment, when touch information output from the first artificial intelligence model or the second artificial intelligence model corresponds to an abnormal touch, the processor 140 may perform an operation corresponding to the abnormal touch. For example, the processor 140 may not turn on power of the electronic apparatus 100, may display a malfunction prevention filter, or may display a user interface (UI) screen indicating that abnormal touch is being input.

In addition, when the change amount of the sensing value exceeds the threshold value, the processor 140 may initialize a state of the second artificial intelligence model, and this will be described in detail later with reference to the accompanying drawings.

As described above, normal touch includes various types of touch input to the touch panel 120 using a touch object such as a finger, a touch pen, a stylus pen, or a pointer, and abnormal touch may include various types of touch input to the touch panel 120 without using the touch object. However, in the description of drawings to be provided later, for convenience of description, only finger touch and pocket touch will be described as examples of normal touch and abnormal touch.

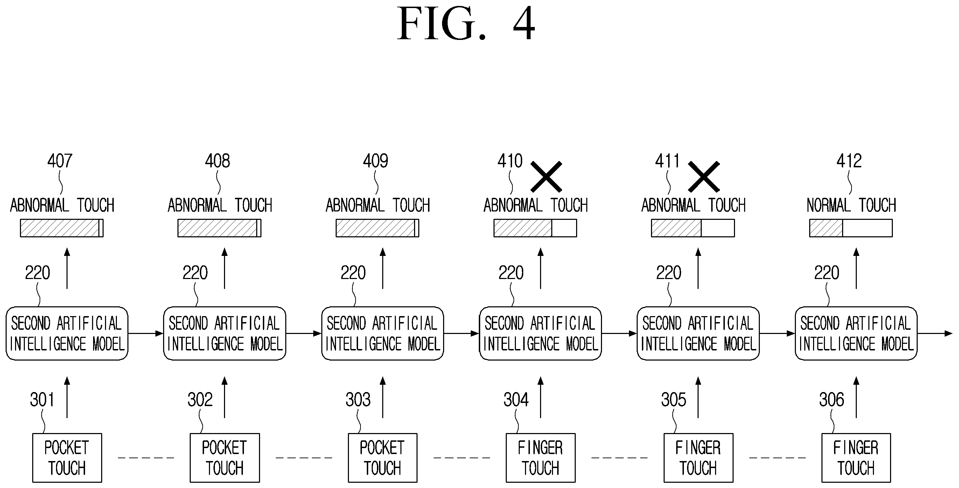

FIG. 3 is a view provided to explain a method of identifying whether a touch is normal by a first artificial intelligence model according to one or more embodiments, and FIG. 4 is a view provided to explain a method of identifying whether a touch is normal by a second artificial intelligence model according to one or more embodiments.

As illustrated in FIG. 3, the processor 140 may input touch data 301, 302, 303, 304, 305, and 306 to a first artificial intelligence model 210 to output touch information 307, 308, 309, 310, 311, and 312.

According to an embodiment, the processor 140 may input touch data 301 corresponding to pocket touch to the first artificial intelligence model 210 to output touch information 307 indicating an abnormal touch. In this case, the first artificial intelligence model 210 may not be suitable for outputting touch information for touch data that is continuously input.

For example, it is assumed that pocket touch is continuously input three times. The processor 140 may input touch data 303 corresponding to the third input pocket touch to the first artificial intelligence model 210 to obtain incorrect touch information 309 indicating a normal touch. As such, the incorrect touch information may be output from the first artificial intelligence model 210 because the training data of the first artificial intelligence model 210 is insufficient and thus parameters of the first artificial intelligence model 210 are not properly adjusted, or because the pocket touch data 303 includes some features similar to those of finger touch data.

However, the first artificial intelligence model 210 may output accurate touch information even when touch data continuously obtained through the touch panel 120 is pocket touch data 301, 302, and 303 and is switched to finger touch data 304.

For example, even when pocket touch data is continuously input three times to the first artificial intelligence model 210 and finger touch data 304 is input, the first artificial intelligence model 210 may output touch information 310 indicating a normal touch. Since the first artificial intelligence model 210 outputs touch information based only on currently input touch data without being affected by previous state information, even when a type of continuously input touch data is changed, the first artificial intelligence model 210 may output more accurate touch information than a second artificial intelligence model 220.

Meanwhile, as illustrated in FIG. 4, the processor 140 may input touch data 301, 302, 303, 304, 305, and 306 to the second artificial intelligence model 220 to obtain touch information 407, 408, 409, 410, 411, and 412.

Since the processor 140 controls state information generated by the second artificial intelligence model 220 in a previous period to be reflected in state information of the second artificial intelligence model 220 in a current period, the second artificial intelligence model 220 may output touch information based on touch data input in the current period and previous state information.

Accordingly, the second artificial intelligence model 220 may be more suitable than the first artificial intelligence model 210 for outputting touch information for touch data that is continuously input.

For example, when pocket touch is continuously input three times, the processor 140 may input touch data 303 corresponding to the third input pocket touch to the second artificial intelligence model 220 to output touch information 409 indicating an abnormal touch.

Even when pocket touch data 303 includes some features similar to finger touch data, the second artificial intelligence model 220 in the current period may receive previous state information generated by the second artificial intelligence model 220 in the previous period and may output touch information based on the previous state information, and since the previous state information includes features of pocket touch data 301 and 302 input in the previous period, the second artificial intelligence model 220 may output accurate touch information 409 indicating an abnormal touch.

However, when a type of continuously input touch data is changed from pocket touch to finger touch, the second artificial intelligence model 220 may output inaccurate touch information.

For example, when pocket touch data is continuously input three times to the second artificial intelligence model 220 and then finger touch data 304 is input, the second artificial intelligence model 220 may output touch information 410 indicating an abnormal touch. The touch information 410 output by the second artificial intelligence model 220 in the current period is based on previous state information and the currently input touch data, and since the previous state information includes features of the pocket touch data 301, 302, and 303, the second artificial intelligence model 220 may output incorrect touch information 410 indicating an abnormal touch.

As described in the description of FIGS. 3 and 4, the first artificial intelligence model 210 may not be suitable for outputting touch information for touch data that is continuously input, whereas the second artificial intelligence model 220 may be suitable for outputting touch information for touch data that is continuously input. In addition, the first artificial intelligence model 210 may output accurate touch information even at a moment when a type of continuously input touch data changes, whereas the second artificial intelligence model 220 may output inaccurate touch information at a moment when a type of continuously input touch data changes.

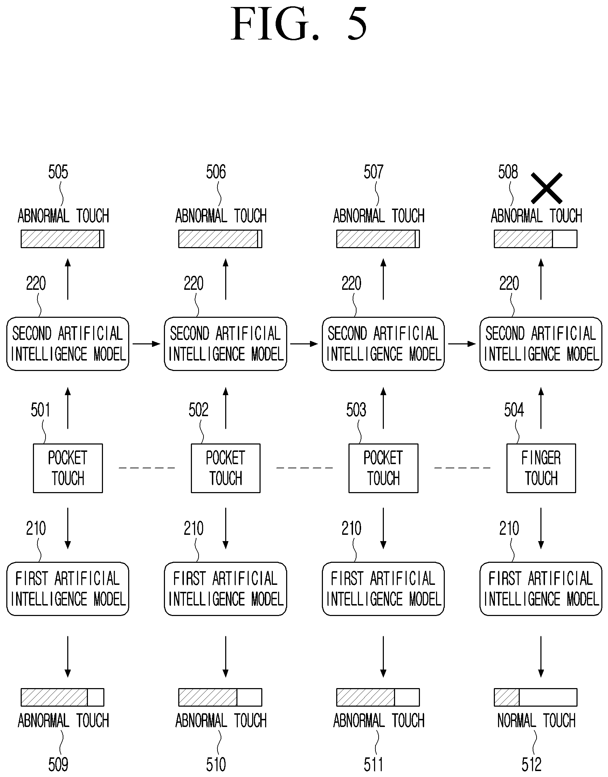

The processor 140 may input touch data to each of the first artificial intelligence model 210 and the second artificial intelligence model 220 simultaneously and compare the output touch information, thereby leveraging advantages of both artificial intelligence models. Based on this, the processor 140 may identify accurate touch information and perform an operation corresponding to the touch information. A detailed operation of the processor 140 comparing the touch information output by simultaneously inputting the touch data to each of the first artificial intelligence model 210 and the second artificial intelligence model 220 will be described later in detail with reference to FIG. 5.

Meanwhile, the above-described first artificial intelligence model 210 and second artificial intelligence model 220 may be configured of a plurality of neural network layers. Each of the plurality of neural network layers has a plurality of weight values, and performs a neural network operation through an operation between an operation result of a previous layer and the plurality of weight values. The plurality of weight values of the plurality of neural network layers may be optimized by learning results of the first artificial intelligence model 210 and the second artificial intelligence model 220. For example, during a learning process, the plurality of weight values may be updated so that a loss value or a cost value obtained from the first artificial intelligence model 210 and the second artificial intelligence model 220 decreases or is minimized. An artificial neural network may include a Deep Neural Network (DNN), and may include, for example, Convolutional Neural Network (CNN), Deep Neural Network (DNN), Recurrent Neural Network (RNN), Restricted Boltzmann Machine (RBM), Deep Belief Network (DBN), Bidirectional Recurrent Deep Neural Network (BRDNN), Long Short-Term Memory (LSTM), or Deep Q-Networks, but is not limited to the above examples.

FIG. 5 is a view provided to explain a method of determining whether to initialize a second artificial intelligence model of an electronic apparatus according to one or more embodiments.

As illustrated in FIG. 5, the processor 140 may input touch data 501, 502, 503, and 504 to the first artificial intelligence model 210 and the second artificial intelligence model 220 to output touch information.

The processor 140 may continuously input three pocket touch data 501, 502, and 503 to the first artificial intelligence model 210 to output touch information 509, 510, and 511 indicating an abnormal touch, and may input the three pocket touch data 501, 502, and 503 to the second artificial intelligence model 220 to output touch information 505, 506, and 507 indicating an abnormal touch. In this case, since touch information output through the first artificial intelligence model 210 and touch information output through the second artificial intelligence model 220 are the same, the processor 140 may identify touch information indicating an abnormal touch as accurate touch information and perform an operation corresponding thereto.

However, when the processor 140 inputs the three pocket touch data 501, 502, and 503 continuously to an artificial intelligence model and then inputs finger touch data 504 to each of the first artificial intelligence model 210 and the second artificial intelligence model 220, touch information 512 indicating a normal touch may be output from the first artificial intelligence model 210, and touch information 508 indicating an abnormal touch may be output from the second artificial intelligence model 220.

In this case, the processor 140 may identify that touch information output by the first artificial intelligence model 210 and the second artificial intelligence model 220 is different, and may identify whether a change amount of a sensing value of the sensor 130 exceeds a threshold value.

According to an embodiment, it is assumed that the electronic apparatus 100 is located inside a pocket so that pocket touch is continuously input through the touch panel 120, and then the electronic apparatus 100 moves to outside the pocket so that finger touch is input to the touch panel 120. When the sensor 130 includes an illuminance sensor and/or a motion detection sensor, as the electronic apparatus 100 moves from inside the pocket to outside, an amount of light incident on the illuminance sensor may greatly increase so that a sensing value of the illuminance sensor greatly changes, or a sensing value of the motion detection sensor may greatly change due to rotational motion or linear motion of the electronic apparatus 100. Therefore, the processor 140 may identify that the electronic apparatus 100 moved from inside the pocket to outside based on that the change amount of the sensing value exceeds the threshold value. Information on the threshold value may be preset and stored in the memory 110.

At this time, the processor 140 may identify that touch is input by a finger outside the pocket, and may identify touch information 512 indicating a normal touch output by the first artificial intelligence model 210 as accurate touch information. In addition, the processor 140 may perform an operation based on touch information 512 indicating a normal touch, and may initialize a state of the second artificial intelligence model 220.

Here, "initializing the second artificial intelligence model 220" may mean that the processor 140 controls the second artificial intelligence model 220 to output touch information based only on currently input touch data. When state initialization of the second artificial intelligence model 220 is performed, the second artificial intelligence model 220 may output touch information through an operation process in which previous state information is not reflected.

For example, when previous state information is implemented in a form of a one-dimensional vector, the processor 140 may delete all previous state information by multiplying previous state information by a zero vector for state initialization of the second artificial intelligence model 220. However, this is merely one example of methods for preventing previous state information from affecting output information of the second artificial intelligence model 220 in a next period, and the processor 140 may perform state initialization of the second artificial intelligence model 220 through various methods.

According to an embodiment, when initialization is performed on the second artificial intelligence model 220, the processor 140 may input touch data for subsequent touch on the touch panel 120 to the initialized second artificial intelligence model 220 to identify whether the subsequent touch is a normal touch.

FIG. 5 illustrates that pocket touch data 501, 502, and 503 is continuously input and then finger touch data 504 is input so that the second artificial intelligence model 220 outputs incorrect touch information 508 indicating an abnormal touch, but even when finger touch data is continuously input and then pocket touch data is input, the processor 140 may, when touch information output by the two artificial intelligence models is different, identify whether a change amount of a sensing value of the sensor 130 exceeds a threshold value.

According to an embodiment, it is assumed that, when the electronic apparatus 100 is located outside a pocket, finger touch is continuously input by a user and then the electronic apparatus 100 moves inside the pocket. The processor 140 may continuously receive finger touch data and then receive pocket touch data and input the pocket touch data to each of the first artificial intelligence model 210 and the second artificial intelligence model 220. In this case, the first artificial intelligence model 210 outputs accurate touch information indicating an abnormal touch with respect to the pocket touch data, whereas the second artificial intelligence model 220 may output inaccurate touch information indicating a normal touch.

At this time, since touch information output by the two artificial intelligence models is different, the processor 140 may identify whether a change amount of a sensing value of the sensor 130 exceeds a threshold value. For example, as the electronic apparatus 100 moves from outside the pocket to inside, an amount of light incident on an illuminance sensor may decrease and thus a sensing value may decrease. In this case, a change amount of a sensing value of the illuminance sensor may increase, or a change amount of a sensing value of a motion detection sensor may increase. When the processor 140 determines that the change amount of the sensing value exceeds the threshold value, the processor 140 may identify that the electronic apparatus 100 moved from outside the pocket to inside, may identify touch information indicating an abnormal touch output by the first artificial intelligence model 210 as accurate touch information, and may perform an operation corresponding to the touch information indicating an abnormal touch. In addition, the processor 140 may initialize the state of the second artificial intelligence model 220 by the above-described method.

In addition, FIG. 5 illustrates only that touch information output by the second artificial intelligence model 220 may be inaccurate, but touch information output by the second artificial intelligence model 220 may be accurate and touch information output by the first artificial intelligence model 210 may be inaccurate, and in this case, the processor 140 may perform an operation corresponding to touch information output by the second artificial intelligence model 220 without initializing the state of the second artificial intelligence model 220.

For example, when the finger touch data 504 of FIG. 5 is pocket touch data, the second artificial intelligence model 220 outputs touch information indicating that all four touches are abnormal touches with respect to four pocket touch data being consecutively input, whereas the first artificial intelligence model 210 may output touch information indicating that the fourth pocket touch data is a normal touch. In this case, since touch information output by the two artificial intelligence models is different, the processor 140 may identify whether a change amount of a sensing value of the sensor 130 exceeds a threshold value. At this time, since the electronic apparatus 100 remains located inside the pocket and a position does not change, a change amount of a sensing value of the sensor 130 including an illuminance sensor and/or a motion detection sensor may also be less than or equal to the threshold value. Since the change amount of the sensing value is less than or equal to the threshold value, the processor 140 may identify touch information output by the second artificial intelligence model 220 as accurate touch information and perform an operation corresponding to the touch information output by the second artificial intelligence model 220. In addition, the processor 140 may not perform state initialization of the second artificial intelligence model 220.

In the above description, a method of determining whether to initialize the state of the second artificial intelligence model 220 based on a change amount of a sensing value has been described, but the processor 140 may determine whether to initialize the state of the second artificial intelligence model 220 based not only on the change amount of the sensing value but also based on a probability value output by the second artificial intelligence model 220, and this will be described in detail later with reference to the accompanying drawings.

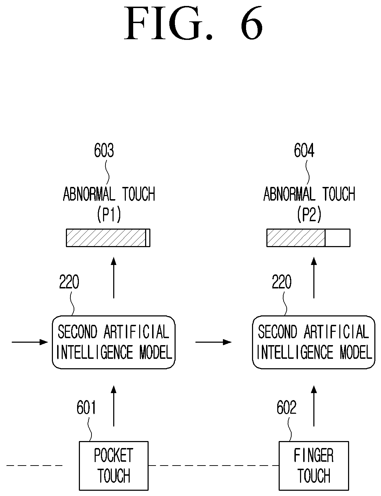

FIG. 6 is a view provided to explain a method of calculating a reset score for state initialization of a second artificial intelligence model of an electronic apparatus according to one or more embodiments.

According to FIG. 6, the processor 140 may continuously input pocket touch data 601 and finger touch data 602 to the second artificial intelligence model 220 to output a probability that the input touch corresponds to an abnormal touch.

According to an embodiment, the processor 140 may identify a difference between a first probability P1 with respect to touch information 603 output by the second artificial intelligence model 220 based on touch data 601 input in a previous period and a second probability P2 with respect to touch information 604 output based on touch data 602 input in a current period.

Here, "probability with respect to touch information" may mean a probability that touch data input to the second artificial intelligence model 220 corresponds to an abnormal touch. At this time, since the second artificial intelligence model 220 outputs a probability that the input touch data corresponds to an abnormal touch and a probability that the input touch data corresponds to a normal touch, a sum of the probability that the touch data corresponds to an abnormal touch and the probability that the touch data corresponds to a normal touch may always be 1, and the second artificial intelligence model 220 may output touch information corresponding to touch having a greater probability value among them. For example, when the second artificial intelligence model 220 outputs 0.3 as a probability that touch data input to the second artificial intelligence model 220 corresponds to a normal touch, a probability that the touch data corresponds to an abnormal touch may be output as 0.7, and the second artificial intelligence model 220 may output touch information indicating that the touch corresponds to an abnormal touch.

In addition, the "first probability" may mean a probability with respect to touch information output by the second artificial intelligence model 220 in the previous period, and the "second probability" may mean a probability with respect to touch information output by the second artificial intelligence model 220 in the current period.

Accordingly, even when the second artificial intelligence model 220 outputs the same touch information indicating an abnormal touch in the previous period and the current period, the first probability and the second probability may have different values. As illustrated in FIG. 6, even when the finger touch data 602 is input to the second artificial intelligence model 220, when the second artificial intelligence model 220 outputs touch information 604 indicating an abnormal touch due to the influence of the pocket touch data 601 input in the previous cycle, the second probability may have a value smaller than the first probability. This is because the first probability is a probability predicted by the second artificial intelligence model 220 that touch data 601 corresponds to an abnormal touch based on pocket touch data 601, whereas the second probability is a probability predicted by the second artificial intelligence model 220 that touch data 602 corresponds to an abnormal touch based on finger touch data 602 and previous state information. For example, when the first probability is 0.95, the second probability may be 0.67.

Returning to FIG. 5, touch information output by the first artificial intelligence model 210 and touch information output by the second artificial intelligence model 220 may be different. In this case, when the change amount of the sensing value of the sensor 130 exceeds the threshold value, the processor 140 may identify a difference value △P between the first probability P1 and the second probability P2, and may calculate a reset score based on the change amount of the sensing value and the difference value △P between the first probability and the second probability.

According to an embodiment, the reset score may be calculated by the following Equation 1. $ResetScore = {W}_{1} Δ {S}_{1} + {W}_{2} Δ {S}_{2} + {W}_{3} Δ P , Δ P = \left|{P}_{1}-{P}_{2}\right|$

Here, △S1 and △S2 may mean a change amount of a sensing value of a first sensor and a change amount of a sensing value of a second sensor, respectively. For example, when the sensor 130 includes an illuminance sensor and a motion detection sensor, the first sensor may be the illuminance sensor and the second sensor may be the motion detection sensor. At this time, △S1 and △S2 are values normalized to have values between 0 and 1.

Here, △P may be a difference value between the first probability and the second probability. In addition, W1, W2, and W3 may mean weights assigned to △S1, △S2, and △P, respectively.

The weights of W1, W2, and W3 may change depending on a situation and may have arbitrary values. For example, it is assumed that a user takes the electronic apparatus 100 out of a pocket in a dark room and inputs touch to the touch panel 120 with a finger. In this case, since there are rotational motion and linear motion in which the electronic apparatus 100 moves from inside the pocket to outside, the change amount △S2 of the sensing value of the motion detection sensor, which is the second sensor, may indicate that the electronic apparatus 100 has changed to a state in which it is taken out of the pocket, but since the electronic apparatus 100 continues to be in the dark room, the change amount △S1 of the sensing value of the illuminance sensor, which is the first sensor, may not indicate that the electronic apparatus 100 has changed to the state in which it is taken out of the pocket. Therefore, in indicating a state change of the electronic apparatus 100, since △S1 is a value that is less important value than △S2, a small weight may be assigned to △S1 and a large weight may be assigned to △S2 (W1 << W2).

In the above description, it has been exemplified that values of the weights may change depending on a state of the electronic apparatus 100, but this is merely one example, and the processor 140 may adjust magnitudes of the weights by various methods, such as identifying how many periods have progressed after state initialization of the second artificial intelligence model 220 is performed and adjusting the magnitudes of the weights. For example, when state initialization of the second artificial intelligence model 220 is performed in an immediately previous period, a large weight may be assigned to △P (W1, W2 << W3), and when state initialization of the second artificial intelligence model 220 is executed before 200 or more periods, a small weight may be assigned to △P (W3 << W1, W2).

When the reset score calculated by the above method exceeds a threshold score, the processor 140 may initialize the state of the second artificial intelligence model 220. For example, when the reset score exceeds 0.5, the processor 140 may initialize the state of the second artificial intelligence model 220. Although description has been made by exemplifying that the threshold score is set to 0.5, the threshold score may have any value between 0 and 1.

According to another embodiment, when the reset score has a value less than or equal to the threshold score, the processor 140 may, without initializing the state of the second artificial intelligence model 220, perform an operation corresponding to touch information output by the first artificial intelligence model 210.

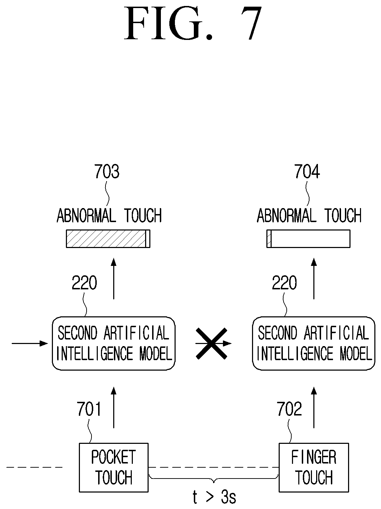

FIG. 7 is a view provided to explain a method of initializing a state of a second artificial intelligence model according to one or more embodiments.

According to FIG. 7, after touch information 703 is output by the second artificial intelligence model 220, when subsequent touch is not input through the touch panel 120 for a predetermined time, the processor 140 may initialize the state of the second artificial intelligence model 220.

According to an embodiment, the processor 140 may input pocket touch data 701 to the second artificial intelligence model 220 to obtain touch information 703 indicating an abnormal touch, and thereafter, when subsequent touch input through the touch panel 120 is not identified for a time of 3 seconds or more, the processor 140 may initialize the state of the second artificial intelligence model 220 by deleting previous state information or by multiplying a zero value so as not to affect an operation process of the second artificial intelligence model 220 in the current period.

In addition, the processor 140 may input subsequent touch data obtained after 3 seconds to the state-initialized second artificial intelligence model 220 to output touch information. In the above description, the predetermined time has been exemplified as 3 seconds, but this is merely one example, and the predetermined time may be set as various times such as 2 seconds, 4 seconds, and the like, a time required for a user to move the electronic apparatus 100 from the inside of a pocket to the outside of the pocket, or a time required for the user to pick up the electronic apparatus 100 from a bottom surface of a desk to an eye level.

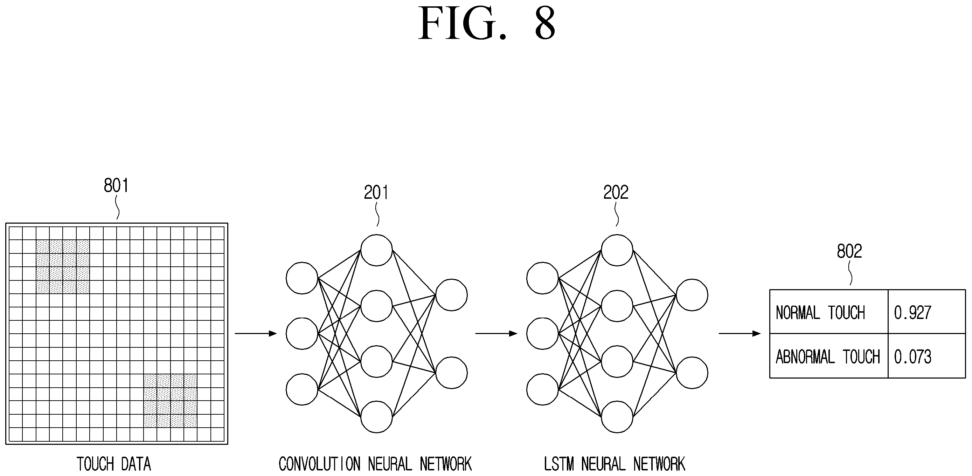

FIG. 8 is a view provided to explain a method of inputting data to a first artificial intelligence model and a second artificial intelligence model according to one or more embodiments.

According to FIG. 8, the processor 140 may input touch data 800 obtained through the touch panel 120 to a Convolutional Neural Network 201, and may input an output value obtained therefrom to a Long Short-Term Memory neural network to output a probability 802 for touch information.

Here, the first artificial intelligence model 210 and the second artificial intelligence model 220 may include both the Convolutional Neural Network 201 and a Long Short-Term Memory neural network 202. Since the first artificial intelligence model 210 is modeled to output touch information in which previous state information is not reflected in the current period, the first artificial intelligence model 210 may not include the Long Short-Term Memory neural network 202, whereas since the second artificial intelligence model 220 outputs touch information reflecting previous state information in the current period, the second artificial intelligence model 220 must include a neural network having a recurrent structure such as the Long Short-Term Memory neural network 202.

According to an embodiment, the first artificial intelligence model 210 and the second artificial intelligence model 220 may be models having the same neural network structure including the Long Short-Term Memory neural network 202, but the first artificial intelligence model 210 may be trained to output touch information in which previous state information is not reflected in the current period, whereas the second artificial intelligence model 220 may be trained to output touch information in which previous state information is reflected in the current period.

According to another embodiment, the first artificial intelligence model 210 may be implemented as a model not including the Long Short-Term Memory neural network 202, and the second artificial intelligence model 220 may be implemented as a model including the Long Short-Term Memory neural network 202. In this case, since the first artificial intelligence model 210 does not include the Long Short-Term Memory neural network 202, the first artificial intelligence model 210 cannot output touch information reflecting previous state information in the current period. On the other hand, since the second artificial intelligence model 220 includes the Long Short-Term Memory neural network, the second artificial intelligence model 220 can output touch information reflecting previous state information.

Here, the touch data 800 may include information on at least one of coordinates at which touch occurs or a change amount of capacitance detected at the coordinates. For example, the touch data 800 may be implemented in a two-dimensional array form, and each element of the two-dimensional array may store an amount of change in capacitance detected by a sensing electrode located at each coordinate.

In addition, the Convolutional Neural Network 201 may include a convolution layer and a pooling layer. According to an embodiment, the processor 140 may input the touch data 800 to the convolution layer to divide the touch data into a plurality of regions and apply, to each divided region, a filter that performs convolution. The processor 140 may obtain feature values for the plurality of regions as a result of convolution, and may input a feature map configured of the feature values for the plurality of regions to the pooling layer. The feature map input to the pooling layer may reduce (downsample) the amount of information of the feature map through operations such as max pooling and average pooling. The processor 140 may obtain a feature map corresponding to the touch data 800 through the Convolutional Neural Network 201 described above.

In addition, the Long Short-Term Memory neural network 202 may include gates of an input gate, a forget gate, and an output gate. According to an embodiment, the processor 140 may input the feature map obtained through the Convolutional Neural Network 201 and previous state information to the Long Short-Term Memory neural network 202. Through the input gate, the processor 140 may generate temporary state information based on the input feature map and the previous state information. In addition, through the forget gate, the processor 140 may output information on how much to remember previous state information, such as whether to completely forget or completely remember the previous state information input based on the input feature map. Through the output gate, the processor 140 may generate current state information based on the temporary state information generated by the input gate, information output by the forget gate, and the previous state information, and may output the probability 802 with respect to touch information based on the current state information.

As illustrated in FIG. 8, when the probability information 802 with respect to touch information output by an artificial intelligence model indicates that a probability corresponding to a normal touch is 0.927 and a probability corresponding to an abnormal touch is 0.073, the processor 140 may identify that the input touch data 800 corresponds to a normal touch and perform an operation corresponding to the normal touch.

The first artificial intelligence model 210 and the second artificial intelligence model 220 including a neural network structure as illustrated in FIG. 8 may be artificial intelligence models trained to identify whether a touch is normal based on at least one of a change in touch coordinates input through the touch panel 120 or a change amount of capacitance.

For example, in the case of a normal touch in which a touch is input through a touch object such as a finger, a stylus pen, or a touch pen, the touch area may be small. In addition, since the user applies pressure to the touch panel 120 with the intention to touch, the touch intensity may be strong, and accordingly, the amount of change in capacitance may be large. On the other hand, when a touch is input to the touch panel 120 by a body part in contact with a pocket, or when pressure is applied to the touch panel 120 by an object other than a touch object, the touch area may be larger than that of a normal touch, whereas the touch intensity may be weak due to the nature of an unintentional touch. Accordingly, an abnormal touch may have a larger touch area and a smaller amount of change in capacitance than a normal touch.

According to an embodiment, the first artificial intelligence model 210 and the second artificial intelligence model 220 may be trained to identify touch data having a feature of a small touch area and a large change amount of capacitance as a normal touch, and to identify touch data having a feature of a large touch area and a small change amount of capacitance as an abnormal touch.

According to another embodiment, the first artificial intelligence model 210 and the second artificial intelligence model 220 may also be trained to identify a case in which the touch area is initially small and then increases over time as touch data corresponding to a normal touch, and to identify a case in which a touch is maintained over a consistently large area even as time passes as touch data corresponding to an abnormal touch.

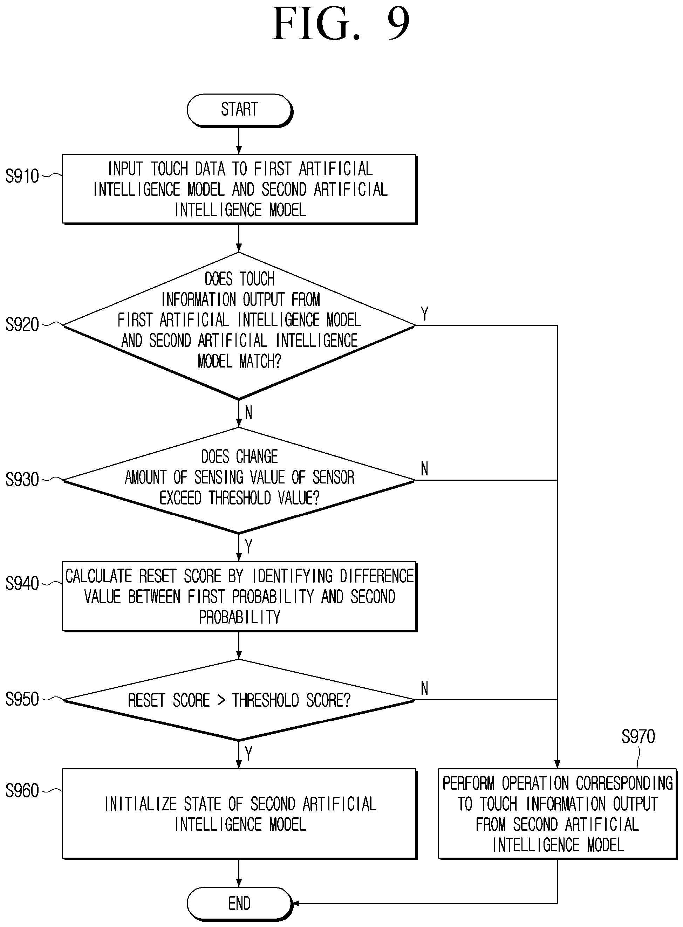

FIG. 9 is a flowchart provided to explain a method of controlling an electronic apparatus according to one or more embodiments.

According to FIG. 9, in operation 910, the electronic apparatus 100 may input touch data to a first artificial intelligence model and a second artificial intelligence model.

Here, the first artificial intelligence model may mean an artificial intelligence model trained to receive touch data input to a touch panel and output information on whether the input touch data corresponds to a normal touch or corresponds to an abnormal touch. Unlike the first artificial intelligence model, the second artificial intelligence model may mean an artificial intelligence model trained to output information on whether touch data corresponds to a normal touch based on previous state information and touch data input in a current period.

In operation 920, the electronic apparatus 100 may identify whether touch information output by the first artificial intelligence model and the second artificial intelligence model matches.

When touch information output by the first artificial intelligence model and the second artificial intelligence model matches (S920: Y), in operation 970, the electronic apparatus 100 may perform an operation corresponding to touch information output by the second artificial intelligence model.

When touch information output by the first artificial intelligence model and the second artificial intelligence model does not match (S920: N), in operation 930, the electronic apparatus 100 may identify whether a change amount of a sensing value of a sensor exceeds a threshold value.

For example, when touch information output by the first artificial intelligence model corresponds to a normal touch whereas touch information output by the second artificial intelligence model corresponds to an abnormal touch, the electronic apparatus 100 may identify whether the change amount of the sensing value of the sensor exceeds the threshold value.

Here, the sensor may include various sensors capable of detecting a state change of the electronic apparatus, such as an illuminance sensor and a motion detection sensor.

When the change amount of the sensing value does not exceed the threshold value (S930: N), in operation 970, the electronic apparatus 100 may perform an operation corresponding to touch information output by the second artificial intelligence model.

When the change amount of the sensing value exceeds the threshold value (S930: Y), in operation 940, the electronic apparatus 100 may identify a difference value between a first probability and a second probability, and may calculate a reset score based on the difference value between the first probability and the second probability and the change amount of the sensing value.

Subsequently, in operation 950, the electronic apparatus 100 may identify whether the reset score exceeds a threshold score.

When the reset score does not exceed the threshold score (S950: N), in operation 970, the electronic apparatus 100 may perform an operation corresponding to touch information output by the second artificial intelligence model.

For example, when touch information output by the second artificial intelligence model corresponds to a normal touch, the electronic apparatus 100 may perform various operations such as turning on power, releasing a lock, or executing or terminating an application.

According to another example, when touch information output by the second artificial intelligence model corresponds to an abnormal touch, the electronic apparatus 100 may perform various operations such as not turning on power, displaying a malfunction prevention filter, or displaying a user interface (UI) screen indicating that an abnormal touch is being input.

When the reset score exceeds the threshold score (S950: Y), in operation 960, the electronic apparatus 100 may initialize a state of the second artificial intelligence model.

Here, when state initialization of the second artificial intelligence model is performed, the second artificial intelligence model may output touch information through an operation process in which previous state information is not reflected. For example, when previous state information is implemented in a form of a one-dimensional vector, the electronic apparatus 100 may delete all previous state information by multiplying previous state information by a zero vector for state initialization of the second artificial intelligence model.

According to an embodiment, when state initialization of the second artificial intelligence model is performed, the electronic apparatus 100 may input touch data for subsequent touch on the touch panel to the initialized second artificial intelligence model to identify whether the subsequent touch is normal.

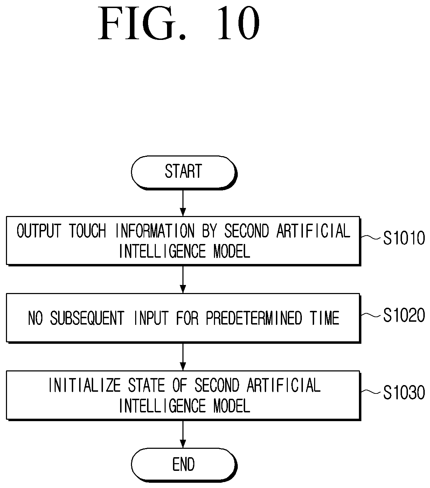

FIG. 10 is a flowchart provided to explain a method of controlling an electronic apparatus according to one or more embodiments.

According to FIG. 10, in operation 1010, when touch data is obtained, the electronic apparatus 100 may input the touch data to the second artificial intelligence model to output touch information.

In operation 1020, after outputting touch information through the second artificial intelligence model, the electronic apparatus 100 may identify that subsequent touch is not input for a predetermined time.

In operation 1030, when identifying that subsequent touch is not input for the predetermined time, the electronic apparatus 100 may initialize a state of the second artificial intelligence model.

In the description of FIGS. 1 to 10 above, only embodiments in which the electronic apparatus 100 can identify whether a touch is normal by using the first artificial intelligence model and the second artificial intelligence model stored in the memory have been described, but the electronic apparatus 100 may be linked with an external server and may perform operations described above with reference to FIGS. 1 to 10 by using various artificial intelligence models stored in the external server.

Various methods described in FIGS. 9 and 10 may be performed by an electronic apparatus having the configuration illustrated in FIG. 2, but are not necessarily limited thereto, and may be performed by an electronic apparatus having various configurations.

Meanwhile, in FIGS. 9 and 10, although an order has been mapped to all steps for convenience of description, it is needless to say that the steps are not necessarily limited to the illustrated order, and steps having no dependency on order or capable of being performed in parallel may be performed in a different order.

Various embodiments of the present disclosure may be applied to and implemented in all types of electronic apparatuses, and each embodiment may be applied to a single apparatus in combination with one another in whole or in part.

Meanwhile, the various embodiments described above may be implemented in a recording medium readable by a computer or a device similar thereto by using software, hardware, or a combination thereof. In some cases, the embodiments described in the present specification may be implemented by the processor itself. According to a software implementation, embodiments such as procedures and functions described in the present specification may be implemented as separate software modules. Each of the software modules may perform one or more functions and operations described in the present specification.

Meanwhile, computer instructions for performing processing operations of the electronic apparatus 100 according to the various embodiments of the present disclosure described above may be stored in a non-transitory computer-readable medium.

The computer instructions stored in such a non-transitory computer-readable medium, when executed by a processor of a specific apparatus, cause the specific apparatus to perform configuration methods according to the various embodiments described above.

The non-transitory computer-readable medium refers to a medium that stores data semi-permanently and can be read by an apparatus, rather than a medium that stores data for a short moment such as a register, cache, or memory. Specific examples of the non-transitory computer-readable medium may include a CD, DVD, hard disk, Blu-ray disc, USB, memory card, and ROM.

Although preferred embodiments of the present disclosure have been illustrated and described above, the disclosure is not limited to the specific embodiments described above, and various modifications may be made by one of ordinary skill in the art without departing from the gist of the disclosure as claimed in the claims, and such modifications are not to be understood in isolation from the technical ideas or prospect of the present disclosure.

## Claims

1. An electronic apparatus comprising:
memory storing a first artificial intelligence model configured to output touch information based on touch data input in a current period and a second artificial intelligence model configured to output touch information based on the touch data input in the current period and previous state information;
a touch panel; and
one or more processors,
wherein the one or more processors are configured to:
input touch data obtained through the touch panel to the first artificial intelligence model and the second artificial intelligence model; and
based on the touch information output from the first artificial intelligence model and the second artificial intelligence model being different, perform an operation corresponding to the touch information output from the first artificial intelligence model.

2. The electronic apparatus of claim 1, further comprising:
a sensor,
wherein the one or more processors are configured to:
based on the touch information output from the first artificial intelligence model and the second artificial intelligence model being different, identify a variation amount of a sensing value of the sensor during a predetermined unit time prior to a touch on the touch panel; and
based on the variation amount exceeding a threshold value, perform an operation corresponding to the touch information output from the first artificial intelligence model.

3. The electronic apparatus of claim 2, wherein the one or more processors are configured to:
based on the variation amount being less than or equal to the threshold value, perform an operation corresponding to the touch information output from the second artificial intelligence model.

4. The electronic apparatus of claim 2, wherein the one or more processors are configured to:
based on the variation amount exceeding the threshold value, initialize a state of the second artificial intelligence model; and
input touch data for a subsequent touch on the touch panel to the initialized second artificial intelligence model to identify whether the subsequent touch is a normal touch.

5. The electronic apparatus of claim 2, wherein the one or more processors are configured to:
based on the variation amount exceeding the threshold value, identify a difference between a first probability regarding touch information output by the second artificial intelligence model based on touch data obtained in a previous period and a second probability regarding touch information output by the second artificial intelligence model based on touch data obtained in a current period;
calculate a reset score based on the difference between the first probability and the second probability and the variation amount; and based on the reset score exceeding a threshold score, initialize the state of the second artificial intelligence model.

6. The electronic apparatus of claim 2, wherein the sensor includes at least one of a motion detection sensor or an illuminance sensor,
wherein the one or more processors are configured to:
identify sensing values of the sensor during the predetermined unit time prior to a touch on the touch panel to calculate the variation amount; and
based on the variation amount exceeding the threshold value, initialize the state of the second artificial intelligence model.

7. The electronic apparatus of claim 1, wherein the one or more processors are configured to:
based on a subsequent touch on the touch panel being not input for a predetermined time after touch information is output by the second artificial intelligence model, initialize the state of the second artificial intelligence model.

8. The electronic apparatus of claim 1, wherein the first artificial intelligence model and the second artificial intelligence model are configured to:
receive touch data obtained through the touch panel at each predetermined period and output touch information indicating whether a touch is a normal touch;
wherein the previous state information includes state information generated by the second artificial intelligence model in a previous period; and
wherein the current state information includes state information generated by the first artificial intelligence model or the second artificial intelligence model based on at least one of touch data obtained through the touch panel in a current period or the previous state information.

9. The electronic apparatus of claim 8, wherein the first artificial intelligence model and the second artificial intelligence model include a convolutional neural network and a Long Short Term Memory (LSTM) neural network.

10. The electronic apparatus of claim 1, wherein the touch data includes information about at least one of coordinates at which a touch occurs on the touch panel, or a variation amount of capacitance detected at the coordinates; and
wherein the first artificial intelligence model and the second artificial intelligence model are artificial intelligence models trained to identify whether a touch is normal based on at least one of a change in the coordinates or the variation amount of capacitance.

11. A method of controlling an electronic apparatus, comprising:
inputting obtained touch data to a first artificial intelligence model and a second artificial intelligence model; and
based on touch information output from the first artificial intelligence model and the second artificial intelligence model being different, performing an operation corresponding to the touch information output from the first artificial intelligence model.

12. The method of claim 11, comprising:
based on the touch information output from the first artificial intelligence model and the second artificial intelligence model being different, identifying a variation amount of a sensing value of a sensor during a predetermined unit time prior to a touch on a touch panel; and
based on the variation amount exceeding a threshold value, performing an operation corresponding to the touch information output from the first artificial intelligence model.

13. The method of claim 12, comprising:
based on the variation amount being less than or equal to the threshold value, performing an operation corresponding to the touch information output from the second artificial intelligence model.

14. The method of claim 12, comprising:
based on the variation amount exceeding the threshold value, initializing a state of the second artificial intelligence model; and
inputting touch data for a subsequent touch on the touch panel to the initialized second artificial intelligence model to identify whether the subsequent touch is a normal touch.

15. A non-transitory computer-readable recording medium storing a computer instruction that, when executed by a processor of an electronic apparatus, causes the electronic apparatus to:
input obtained touch data to a first artificial intelligence model and a second artificial intelligence model; and
based on touch information output from the first artificial intelligence model and the second artificial intelligence model being different, perform an operation corresponding to the touch information output from the first artificial intelligence model.
